# EUROPEAN PATENT SPECIFICATION

(11) **EP 3 240 963 B1**
(45) Date of publication and mention of the grant of the patent: **03.04.2019**
(21) Application number: 15820050.1
(22) Date of filing: 29.12.2015
(51) Int. Cl.: F16G 5/16

(54) **METHOD FOR ASSEMBLING A DRIVE BELT WITH DIFFERENT TYPES OF TRANSVERSE MEMBERS FOR A CONTINUOUSLY VARIABLE TRANSMISSION AND A THUS ASSEMBLED DRIVE BELT**
VERFAHREN ZUR MONTAGE EINES ANTRIEBSRIEMENS MIT VERSCHIEDENARTIGEN TRAVERSEN FÜR EIN STUFENLOSES GETRIEBE UND AUF DIESE WEISE ZUSAMMENGESETZTER ANTRIEBSRIEMEN
PROCÉDÉ POUR ASSEMBLER UNE COURROIE D'ENTRAÎNEMENT AVEC DIFFÉRENTS TYPES D'ÉLÉMENTS TRANSVERSAUX POUR UNE TRANSMISSION À VARIATION CONTINUE ET COURROIE D'ENTRAÎNEMENT AINSI ASSEMBLÉE

(30) Priority: 30.12.2014 NL 1041129
(43) Date of publication of application: 08.11.2017
(73) Proprietor: Robert Bosch GmbH, 70442 Stuttgart (DE)
(72) Inventor: VAN DER NOLL, Erik, NL-5000 AM Tilburg (NL)
(74) Representative: Plevier, Gabriël Anton Johan Maria
(86) International application number: PCT/EP2015/025116
(87) International publication number: WO 2016/107681

(56) References cited:
- JP-A- 2007 257 608
- JP-A- 2013 133 894
- JP-U- S61 103 651

## Description

The present invention relates to a drive belt for a continuously variable transmission, which drive belt is in particular destined to be arranged around two pulleys of the transmission and which drive belt comprises a plurality of discrete transverse elements, i.e. transverse members for contacting the transmission pulleys, as well as one or more endless, i.e. annular, carriers for carrying and guiding the transverse members in the transmission. The present type of drive belt is also referred as a pushbelt.

The endless carrier of the drive belt is typically composed of a plurality of mutually nested, continuous flexible metal rings and is also known as a ring set. The ring set is at least partly inserted in a recess provided in the transverse members. In case the drive belt comprises only one ring set, such ring set is typically mounted in a central recess of the transverse members that opens towards the radial outside of the drive belt. However, usually the drive belt is provided with at least two ring sets that are each mounted in a respective one of two recesses of the transverse members, which recesses then open towards a respective axial or lateral side of the transverse members, i.e. of the drive belt.

The transverse members of the drive belt are slidingly arranged along the circumference of the ring set or ring sets in an, at least essentially, continuous row, such that these members are able to transmit forces that are related to a movement of the drive belt. The transverse members have two main body surfaces that, at least partly, extend substantially parallel with respect to each other and that are separated from each other over the (local) thickness of the transverse member by a circumferential side surface thereof. As seen along the circumference of the carrier, the transverse members have a comparatively small dimension, i.e. thickness, such that a several hundreds thereof are present in the drive belt. In practice, the transverse members are between 1 and 2.5 mm thick, typically about 1.5 mm, and more than 400 are typically comprised in a single drive belt.

Adjoining transverse members are designed to be able to tilt relative to one another, such that the belt is able to follow a curved trajectory. To accommodate and control such relative tilting, one of the two main body surfaces of the two adjoining transverse members in the drive belt that are in mutual contact is provided with a (so-called) rocking edge in the form of an axially and radially extending section of the respective main body surface(s) that is convexly curved in radial direction. In this respect, it is noted that the radial direction is defined relative to the drive belt when it is placed in a circular posture.

Parts of the side surface of the transverse members, which parts are predominantly oriented in the axial direction, i.e. widthwise, are corrugated and are intended for frictionally contacting the transmission pulleys, in particular by being clamped widthwise between two conical sheaves of such pulleys. The friction contact between the transverse members and the conical pulley sheaves allows a force to be transferred there between, such that the drive belt can transmit a drive torque and rotational movement from one transmission pulley to the other.

Although, typically, the majority of the transverse members of a drive belt are identically shaped, it is also well-known, for example from the United States patent No. 4,824,424 or the patent publication US-A-2006/0079361, to include transverse members having a mutually different thickness into a single drive belt in order to attenuate the noise that is caused by the transverse members successively impacting the pulleys during operation of the transmission, at least relative to a standard belt including only transverse members of mutually identical thickness. For example, the drive belt may be provided with an equal number of 1.4 mm and of 1.5 mm thick transverse members that are randomly dispersed amongst one another in the row of the transverse members of the drive belt.

More specifically, according to US-A-2006/0079361, a plurality of drive belts are randomly assembled from both first and second types of transverse members that differ by their respective, i.e. relative thickness and the noise that is generated during operation of the transmission is measured for all of these drive belts. In relation to the drive belt that is associated with the least noise being generated by the transmission, the sequence of the said first and second type of transverse members is determined and the mass production of the drive belt takes place according to such determined sequence.

Another example of the same principle of applying transverse members of different thickness in the drive belt is given by the US patent No. 8104159. According to this US-8104159 the total number of transverse members in the drive belt is split into two or more consecutive groups of transverse members, with each such group being defined by a specific ratio of thinner versus thicker transverse members that are randomly mixed.

Yet another example of the same principle of applying transverse members of different thickness in the drive belt is given by the Japanese patent application with publication No. 2013-133894. According to this JP-2013-133894 the total number of transverse members in the drive belt is again split into a number of consecutive groups, whereof each group includes transverse members of one and the same thickness only. In this case the desired randomization is realized by differentiating the length of the said groups, i.e. in the number of transverse members that is included therein being different between the said groups.

Although the above, known drive belt assembly methods of randomizing the thickness (pattern) of the transverse members of the drive belt can indeed be successful in reducing transmission noise, these known assembly methods are considered less practical in mass-manufacture, because of the random aspect thereof. Such randomness is contradictory to the very nature of sophisticated and contemporary manufacturing requirements that require deterministic processes to achieve the highest quality, predictability and control standards possible. Furthermore, not every randomly assembled pattern or sequence of the said types transverse members will perform equally well in terms of impact noise reduction. To the contrary, in mass-manufacture it is likely that some of the thus assembled belts do not provide a noticeable impact noise reduction at all.

It is an object of the present disclosure to provide for a drive belt assembly method that is favorable in terms of the pulley impact noise that is produced thereby, but that also favors the mass-manufacture of the drive belt, in particular by avoiding any randomization of the order of the transverse members of different thickness applied therein.

According to the present disclosure, such object is achieved with the drive belt assembly method in accordance with the claim 1 hereinafter. In such novel drive belt assembly method at least three of groups of two types of transverse members are included in the drive belt as follows:
- a first type of transverse member is relatively thin,
- a second type of transverse member is relatively thick,
- a first group of transverse members comprises only the thinner transverse members of the first type,
- a second group of transverse members comprises only the thicker transverse members of the second type, and
- a third group of transverse members comprises both the thinner transverse members of the first type and the thicker transverse members of the second type.

A thus assembled drive belt is provided with a well defined pattern of thinner and thicker transverse members that can be easily assembled and is repeatable in mass manufacture, while favorably producing only minimal pulley impact noise during operation of the transmission.

The said groups of transverse members both can have the same length and can include an identical number of transverse members, without substantial compromise to the said noise attenuation. In particular, by adjusting the number of transverse members that is included in a respective group, the number of transverse members of a respective type, as incorporated in the drive belt in total, can be influenced. In particular, the demand for each of the said two types of transverse members can be tailored to the relative numbers thereof that are actually available for the assembly of the drive belt. Such flexibility in drive belt assembly is advantageous, because it allows for likewise flexible (pre-)production numbers of the transverse members of the different thickness types.

Preferably, the said first, second and third groups do not comprise all of the total number of transverse members in the drive belt, but, for example, only 80% thereof. The remaining 20% of the total number of transverse members in the drive belt is then available to be assembled according to another requirement of method, as deemed favorable. For example for accurately adapting the total length of the row of transverse members to the circumference length of the ring sets, by replacing one or more of the transverse members of one type with transverse members of the other type. This is normally required to compensate for the manufacturing tolerances that are applicable to the thickness and flatness of the individual transverse member and/or to the in the circumference length of the ring set. In practice, 5% or possibly even 2% of the total number of transverse members is typically enough for this purpose, leaving up to 98% of such total number available for the said first, second and third groups and to attain an appreciable noise reduction.

In a first elaboration of the drive belt according to the present disclosure, the two types of transverse members comprised by the said third group are arranged in a regular, in particular, mutually alternating pattern. Hereby, any randomness in the assembly pattern of the drive belt is favorably avoided, while the thus assembled drive belt favorably produces only minimal pulley impact noise during operation of the transmission.

In a second elaboration according to the present disclosure, the drive belt comprises multiple instances of one or more of said first, second and third groups of transverse members, which groups of transverse members are provided in the drive belt in a mutually alternating pattern. In a preferred elaboration of this second embodiment, the drive belt comprises three instances of each one of said first, second and third groups of transverse members. Most preferably, these nine groups of transverse members are provided in an irregular pattern in circumference direction, namely as follows:
- first group, second group, first group,
- second group, third group, second group,
- third group, first group, third group.

This specific group pattern within the scope of the present disclosure, provides the best performance in terms of the reduced level of pulley impact noise that is produced thereby during operation of the transmission relative to a standard belt including only transverse members having the same thickness.

The background for the above insights and embodiments are explained hereinafter with reference to the accompanying drawing figures. In the drawing figures equal reference signs indicate equal or similar structures and/or parts.
Figure 1 provides a schematic perspective view of the continuously variable transmission with a drive belt running over two pulleys, which drive belt includes a ring set, as well as a number of transverse members that are arranged in a row along the circumference of the ring set.
Figure 2 shows a cross section of the known drive belt viewed in the circumference direction thereof.
Figure 3 provides a width-wise oriented view of a transverse member of the known drive belt.
Figure 4 is a schematic representation of a row of transverse members of the drive belt in accordance with known art, which row includes a random arrangement of transverse members of two types, each type having a different size in terms of a respective thickness thereof.
Figure 5 is a first schematic representation of a row of transverse members of the drive belt in accordance with the present disclosure.
Figure 6 is a second schematic representation of a row of transverse members of the drive belt in accordance with the present disclosure.

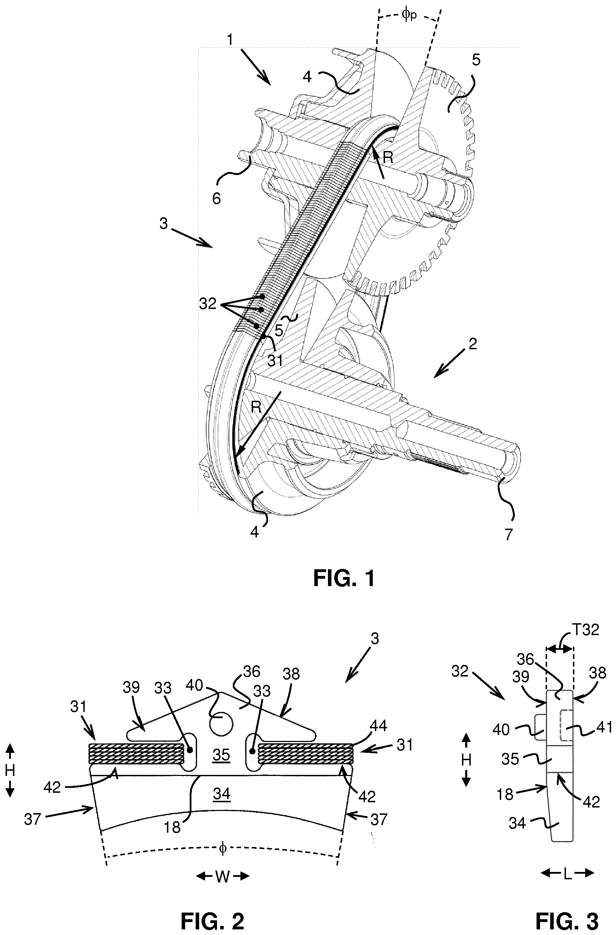

The schematic illustration of a continuously variable transmission in Figure 1 shows a drive belt 3 that is wrapped around two pulleys 1, 2 and that includes a closed, i.e. endless carrier or ring set 31 and an essentially contiguous row of transverse members 32 that are mounted on the ring set 31, arranged along the circumference thereof. The drive belt 3 and the pulleys 1, 2 are in friction contact, whereto the conical discs 4, 5 of each pulley 1, 2 are urged towards each other, thereby exerting respective clamping forces on the drive belt 3. In the illustrated position, the upper pulley 1 will rotate more quickly than the lower pulley 2. By changing the distance between the two conical discs 4, 5 from which each pulley 1, 2, the so-called running radius R of the drive belt 3 on the respective pulleys 1, 2 can be changed, as a result of which the speed difference between the two pulleys 1,2 can be varied as desired. This is a known manner of transmitting a driving force between an input shaft 6 and an output shaft 7 of the transmission, with a continuously variable rotational speed ratio between these input and output shafts 6, 7.

In Figure 2, the drive belt 3 is shown in a cross section thereof facing in the circumference or length direction L of the belt 3, i.e. facing in a direction perpendicular to the axial or width W direction and the radial or height H direction of the drive belt 3. This figure 2 illustrates an embodiment of the drive belt 3 that is equipped with two ring sets 31, each shown in cross-section. The ring sets 31 carry and guide the transverse elements 32 of the drive belt 3, whereof one transverse element 32 is shown in front elevation in Figure 2. The transverse members 32 and the ring sets 31 of the drive belt 3 are typically made of steel alloys.

In this particular exemplary embodiment, the ring sets 31 are composed of five individual endless bands or rings 44 each, which endless rings 44 are mutually concentrically nested to form the ring set 31. In practice, the ring sets 31 often comprise more than five endless rings 44. The transverse elements 32 are able to move, i.e. slide along the ring sets 31 in the said length direction L, so that when a driving force is transmitted form one of the transmission pulleys 1, 2 to the other, this force is transmitted -at least in part- by the transverse elements 32 pressing against one another and, thus, pushing each other forward in a direction of rotation of the drive belt 3 and of the pulleys 1, 2.

The transverse member 32, which is also shown in a side view in Figure 3, is provided with two cut-outs 33 located opposite one another and opening widthwise, towards opposite sides of the transverse member 32. Each cut-out 33 accommodates a respective one of the two ring sets 31. A first or base portion 34 of the transverse member 32 thus is located radially inward of the ring sets 31, a second or middle portion 35 of the transverse member 32 is situated in between the ring sets 31 and a third or top portion 36 of the transverse member 32 is located radially outward of the ring sets 31. The radial inner or lower side of a respective cut-out 33 is delimited, in part, by a so-called bearing surface 42 of the base portion 34 of the transverse member 32, which bearing surface 42 faces radially outwards in the general direction of the top portion 36. This bearing surface 42 contacts the radial inside of the ring set 31, especially in the parts of the drive belt 3 that are clamped between the sheaves 4, 5 of the transmission pulleys 1, 2.

Lateral side surfaces 37 of the said body part 34 of the transverse element 32 that arrive in contact with the pulley discs 4, 5 are oriented at an angle φ with respect to one another, which corresponds, at least predominantly, to a V-angle between these discs 4, 5.

A first or rear surface 38 of the two main body surfaces 38, 39 of transverse member 32 that face in mutually opposite circumference directions L, is essentially flat. The other or front main body surface 39 of the transverse member 32 is provided with a so-called rocking edge 18 that forms, in the height direction H, the transition between an upper part of the front surface 39, extending essentially in parallel with its rear surface 38, and a lower part thereof that is slanted such that it extends towards the rear surface 38. In Figure 2 the rocking edge 18 is indicated only schematically by way of a single line, however, in practice the rocking edge 18 is mostly provided in the form of a part of the said front surface 39 that is convexly curved in the height direction H and that is straight and flat in the width direction W. Thus, an upper part of the transverse member 32 that is located radially outward from/above the rocking edge 18 is provided with an essentially constant dimension between the main body surfaces 38, 39 thereof, i.e. as seen in the circumference direction L, which dimension is referred to as the thickness T32 of the transverse member 32. Furthermore, it is common practice to provide with a protrusion 40 and a recess 41 in the top portion 36 of the transverse member 32, however on opposite sides thereof. In the drive belt 3, this protrusion 40 and recess 41 engage one another between adjacent transverse members 32 in the row of transverse members 32. Hereby, the adjacent transverse members 32 are aligned relative to one another perpendicular to the said circumference direction L.

Typically, the said thickness T32 is the same for the vast majority, e.g. for more than 98%, of the transverse members 32 of the drive belt 3, with a value in the range from 1 to 2 millimeter. A typical value for the said thickness T32 of the transverse members 32 is 1.5 mm and a typical value for the complete continuous row of transverse members 32 of the drive belt 3 is 0.7 meter. The remaining approximately 2% of the total number of transverse elements 32 of the drive belt 3 is available for accurately adapting the total length of the row of transverse members 32 to the exact circumference length of the ring sets 31, by replacing one or more of the standard transverse members 32 with so-called filler transverse members that are slightly thicker or slight thinner then these standard transverse members 32. This final assembly step provides for the necessary flexibility in drive belt manufacture for accommodating inevitable manufacturing tolerances.

During operation of the transmission, i.e. during the rotation of the pulleys 1, 2 and the drive belt 3, the transverse members 32 thereof successively enter between the pulley discs 4, 5, by which repeated contacts between the transverse members 32 and the pulleys discs 4, 5 vibrations are generated, which vibrations may, in turn, generate noise that can be heard by the occupants of the vehicle wherein the transmission is applied. It is a known design principle to make the said repeated contact less regular by applying transverse members 32 of mutually different thicknesses in the row of transverse members 32 of the drive belt 3. For example, in this respect it is known from EP-A-0305023 to apply two types of transverse members 32 of mutually different thickness in a random distribution in the said row of transverse members 32 of the drive belt 3. US-A-2006/ 0079361 goes one step further by checking several of such random distributions in terms of the noise being generated during operation of the drive belt 3 in the transmission and to apply in mass production of the drive belt 3 only that distribution, i.e. that specific sequence of said two types of transverse members 32 that is associated with the lowest noise level.

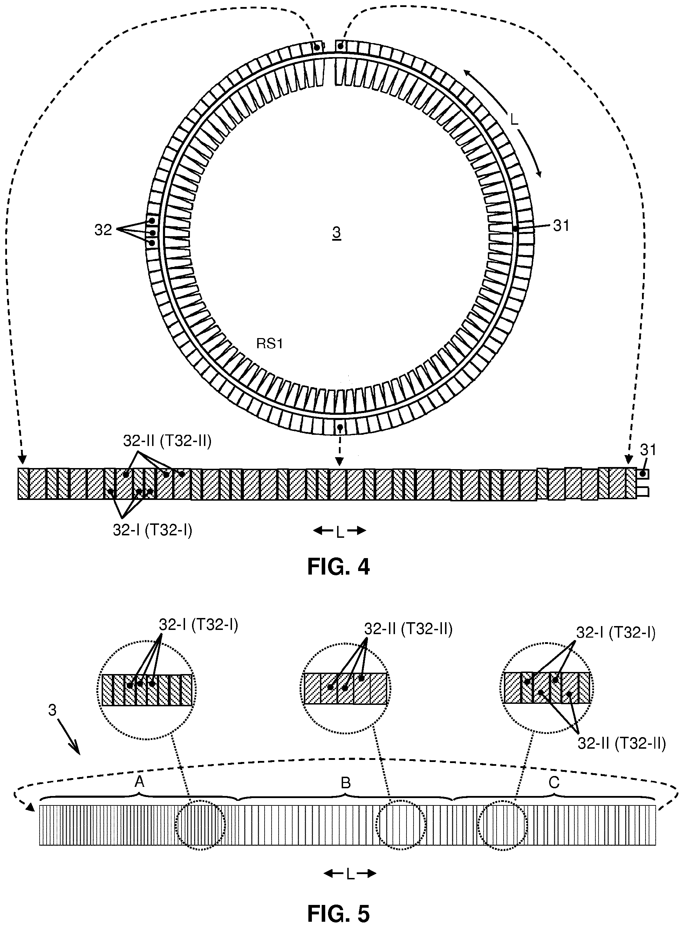

An example of a thus assembled known drive belt 3 is schematically illustrated in figure 4. In figure 4 the thickness T32 of the transverse members 32 has been exaggerated relative to the circumference length of the drive belt 3 for illustration purposes, i.e. to show that the row of transverse members 32 of the drive belt 3 includes both thinner transverse members 32-I, having a relatively small thickness T32-I, and thicker transverse members 32-II, having a relatively large thickness T32-II, in the particular order or sequence. Also the difference in thickness between the thinner transverse members 32-I and the thicker transverse members 32-II has been exaggerated in figure 4. In this respect it is noted that, although a large thickness difference could yield a better result in terms of pulley impact noise reduction, in practice such thickness difference is in practice limited to approximately 20%, due to several considerations such as the manufacturability and/or the load carrying ability of the transverse member 32.

Figure 4 also illustrates a second aspect of drive belt assembly method, namely that, due to manufacturing tolerances, it may occur that the exact circumference length of the ring sets 31 does not correspond with the exact length of the row of transverse members 32, at least not within an allowed manufacturing tolerance for such mismatch between the said lengths. In the example of figure 4 the ring sets 31 are somewhat longer than the row of transverse members 32, which may be corrected in a final assembly step of the drive belt manufacturing method wherein one or more of the thinner transverse members 32-I are removed from the drive belt 3 and replaced by one or more of the thicker thinner transverse members 32-II (not illustrated).

According the present disclosure this known drive belt 3 and drive belt assembly method can be improved upon, while maintaining a favorably low pulley impact noise during the operation thereof in the CVT, in particular in terms of the practicality of the assembly method. To this end, it is presently suggested to compose the complete row of transverse members 32 of the drive belt 3 of at least three groups A, B, C, of the said thinner transverse members 32-I and the said thicker transverse members 32-II, whereof:
- a first group A of transverse members 32 comprises only the thinner transverse members 32-I,
- a second group B of transverse members 32 comprises only the thicker transverse members 32-II, and
- a third group C of transverse members comprises both the thinner transverse members 32-I and the thicker transverse members 32-II.

A thus assembled drive belt 3 is schematically illustrated in figure 5 and is provided with a well defined pattern of the thinner transverse members 32-I and the thicker transverse members 32-II, which pattern is easily repeatable in mass manufacture. In this particular example, in the third group C the thinner transverse members 32-I and the thicker transverse members 32-II are provided in a mutually alternating sequence, however, this latter feature is not essential. Other sequences or possibly a random distribution of the thinner transverse members 32-I and the thicker transverse members 32-II in group C can be applied as well, with a corresponding reduction of the said pulley impact noise.

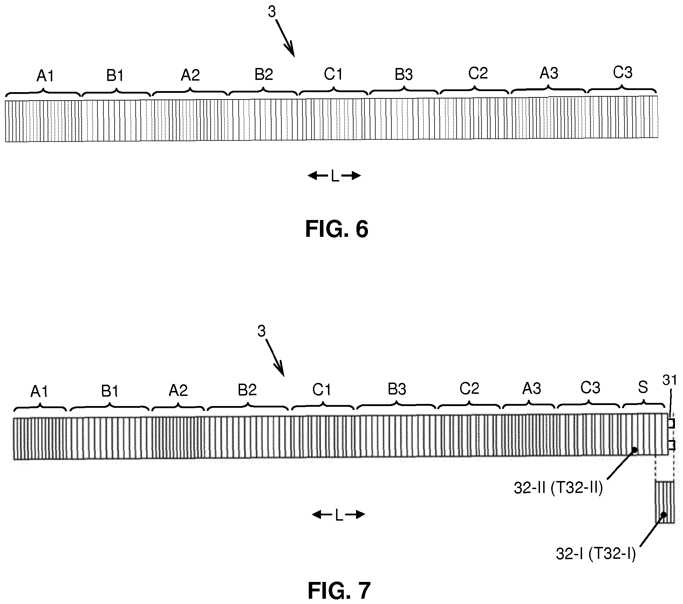

By increasing the number of instances of each such group A, B, C of transverse members 32 in the drive belt 3, the variability of the initial contact between the pulley discs 4, 5 and the successive transverse members 32 increases, such that a corresponding decrease of the said pulley impact noise may be realized. However, by modeling the drive belt 3 in accordance with the present invention, a clear optimum is found at a total of 9 groups, i.e. at 3 instances of each group A, B, C. Such nine groups A1, A2, A3, B1, B2, B3, C1, C2, C3 can be arranged in several mutually alternating patterns, such as A1, B1, C1, A2, B2, C2, A3, B3, C3. However, from a point of view of pulley impact noise reduction and within closed loop arrangement thereof in the drive belt 3, only one such pattern provides an optimal outcome, namely: A1, B1, A2, B2, C1, B3, C2, A3, C3, which pattern is illustrated in figure 6.

A seemingly alternative pattern in this latter respect is: A1, B1, A2, C1, A3, C2, B2, C3, B3. However this latter pattern is merely the reverse of the aforementioned pattern when starting at group A2 thereof and moving from left to right in figure 6.

In the example embodiment of the drive belt 3 according to figure 6, the said nine groups of transverse members 32 are provided with more or less the same length. However, within the context of the present disclosure, it is possible to differentiate between such group lengths. For example, as schematically illustrated in figure 7, the nine groups A1, A2, A3, B1, B2, B3, C1, C2, C3 can include the same or a similar amount of transverse members 32 each.

Furthermore, figure 7 illustrates a further aspect of drive belt assembly. In figure 7 in addition to the said nine groups A1, A2, A3, B1, B2, B3, C1, C2, C3 an additional or, in this example, tenth group S of transverse members 32 is included in the drive belt 3. The transverse elements 32 of/in this additional group S are available for accurately adapting the total length of the row of transverse members 32 to the exact circumference length of the ring sets 31 in the said final assembly step in drive belt manufacturing. For instance, as illustrated in figure 7, the additional group S of transverse members 32 initially comprises only the thicker transverse members 32-II, whereof (in this example) two are replaced by (in this example) five of the thinner transverse members 32-I. As a result the length of the additional group S is extended to such an extent that the circumference length of the ring sets 31 is substantially completely filled with transverse members 32.

Thus, the said final assembly of the drive belt 3 can take place without interfering with the pattern of the thinner transverse members 32-I and the thicker transverse members 32-II provided by the said groups A, B, C, which pattern is specifically aimed at the reduction of pulley impact noise that thus remains unaltered by/in final assembly. Preferably, such additional group S of transverse members 32 includes less transverse members 32 then said other groups A, B, C to minimize a possible detrimental effect thereof on the pulley impact noise reduction. In this latter respect, the additional group S of transverse members 32 preferably includes 5% or less of the total number of transverse members 32 of the drive belt 3.

The present disclosure, in addition to the entirety of the preceding description and all details of the accompanying figures, also concerns and includes all the features of the appended set of claims. Bracketed references in the claims do not limit the scope thereof, but are merely provided as non-binding examples of the respective features. The claimed features can be applied separately in a given product or a given process, as the case may be, but it is also possible to apply any combination of two or more of such features therein.

The invention(s) represented by the present disclosure is (are) not limited to the embodiments and/or the examples that are explicitly mentioned herein, but also encompasses amendments, modifications and practical applications thereof, in particular those that lie within reach of the person skilled in the relevant art.

## Claims

1. Method for the assembly of a drive belt (3) with an endless carrier (31) and with a row of transverse members (32) that are slidably arranged on the carrier (31), each transverse member (32) being provided with a front surface (39) and a rear surface (38), where between the transverse member (32) extends in thickness direction, and with lateral side surfaces (37), where between the transverse member (32) extends in width direction, which lateral side surfaces (37) are destined for contact with pulley discs (4, 5) of pulleys (1, 2) of a transmission wherein the drive belt (3) can be applied, of which transverse members (32) at least two types (32-I, 32-II) with a mutually different dimension in the said thickness direction (T32-I; T32-II) are contained in the drive belt (3), **characterized in that** the said row of transverse members (32) is composed to include at least three groups (A, B, C) of a number of consecutively arranged transverse members (32), whereof a first group (A) exclusively consists of relatively thin transverse members (32-I), whereof a second (B) exclusively consists of relatively thick transverse members (32-II), **characterized in that** a third group (C) includes both the relatively thin transverse members (32-I) and the relatively thick transverse members (32-II) provided in a mutually alternating sequence or in a random distribution.

2. The method for drive belt (3) assembly according to claim 1, **characterized in that** the said row of transverse members (32) of the drive belt (3) is composed to include at least three instances of each of the said least three groups (A, B, C) of a number of consecutively arranged transverse members (32).

3. The method for drive belt (3) assembly according to claim 1 or 2, **characterized in that** the said row of transverse members (32) of the drive belt (3) is composed to include a succession of a first group (A1) that exclusively consists of the relatively thin transverse members (32-I), a second group (B1) that exclusively consists of the relatively thick transverse members (32-II), a third group (A2) that exclusively consists of the relatively thin transverse members (32-I), a fourth group (B2) that exclusively consists of the relatively thick transverse members (32-II), a fifth group (C1) that includes both the relatively thin transverse members (32-I) and the relatively thick transverse members (32-II), a sixth group (B3) that exclusively consists of the relatively thick transverse members (32-II), a seventh group (C2) that includes both the relatively thin transverse members (32-I) and the relatively thick transverse members (32-II), an eight group (A3) that exclusively consists of the relatively thin transverse members (32-I) and a ninth group (C3) that includes both the relatively thin transverse members (32-I) and the relatively thick transverse members (32-II).

4. Drive belt (3) with an endless carrier (31) and with a row of transverse members (32) that are slidably arranged on the carrier (31), each transverse member (32) being provided with a front surface (39) and a rear surface (38), where between the transverse member (32) extends in thickness direction, and with lateral side surfaces (37), where between the transverse member (32) extends in width direction, which lateral side surfaces (37) are destined for contact with pulley discs (4, 5) of pulleys (1, 2) of a transmission wherein the drive belt (3) can be applied, of which transverse members (32) at least two types (32-I, 32-II) with a mutually different dimension in the said thickness direction (T32-I; T32-II) are contained in the drive belt (3), **characterized in that** the said row of transverse members (32) is composed of at least three groups (A, B, C) of a number of consecutively arranged transverse members (32), whereof a first group (A) exclusively consists of relatively thin transverse members (32-I), whereof a second (B) exclusively consists of relatively thick transverse members (32-II), **characterized in that** a third group (C) includes the relatively thin transverse members (32-I) and the relatively thick transverse members (32-II) provided in a mutually alternating sequence.

5. The drive belt (3) according to claim 4, **characterized in that** the said row of transverse members (32) thereof includes at least three instances of each of the said least three groups (A, B, C) of a number of consecutively arranged transverse members (32).

6. The drive belt (3) according to claim 4, **characterized in that** the said row of transverse members (32) thereof includes at least a succession of a first group (A1) that exclusively consists of the relatively thin transverse members (32-I), a second group (B1) that exclusively consists of the relatively thick transverse members (32-II), a third group (A2) that exclusively consists of the relatively thin transverse members (32-I), a fourth group (B2) that exclusively consists of the relatively thick transverse members (32-II), a fifth group (C1) that includes both the relatively thin transverse members (32-I) and the relatively thick transverse members (32-II), a sixth group (B3) that exclusively consists of the relatively thick transverse members (32-II), a seventh group (C2) that includes both the relatively thin transverse members (32-I) and the relatively thick transverse members (32-II), an eight group (A3) that exclusively consists of the relatively thin transverse members (32-I) and a ninth group (C3) that includes both the relatively thin transverse members (32-I) and the relatively thick transverse members (32-II).

7. The drive belt (3) according to claim 4, 5 or 6 **characterized in that** the said group (C) or groups (C1; C2; C3) that includes both the relatively thin transverse members (32-I) and the relatively thick transverse members (32-II) includes a similar amount of these two types (32-I, 32-II) of transverse members (32).

8. The drive belt (3) according to one or more of the claims 4 to 7, **characterized in that** the groups (A, B, C; A1, A2, A3, B1, B2, B3, C1, C2, C3) of a number of consecutively arranged transverse members (32) include similar amounts of transverse members (32).

9. The drive belt (3) according to one or more of the claims 4 to 7, **characterized in that** the groups (A, B, C; A1, A2, A3, B1, B2, B3, C1, C2, C3) of a number of consecutively arranged transverse members (32) have similar lengths as seen in circumference direction.

10. The drive belt (3) according to one or more of the claims 4 to 9, **characterized in that**, together, the groups (A, B, C; A1, A2, A3, B1, B2, B3, C1, C2, C3) of a number of consecutively arranged transverse members (32) include at least 80% and preferably 95% to 98% of a total number of transverse members (32) contained in the drive belt (3).

11. The drive belt (3) according to claim 10, **characterized in that** the transverse members (32) thereof that are not included in the said groups (A, B, C; A1, A2, A3, B1, B2, B3, C1, C2, C3) of a number of consecutively arranged transverse members (32), are consecutively arranged in a final group (S).

## Patentansprüche

1. Verfahren zum Zusammenbau eines Antriebsriemens (3) mit einem endlosen Träger (31) und mit einer Reihe von quer verlaufenden Elementen (32), die verschiebbar auf dem Träger (31) angeordnet sind, wobei jedes quer verlaufende Element (32) mit einer Vorderfläche (39) und einer Rückfläche (38), zwischen denen sich das quer verlaufende Element (32) in einer Dickenrichtung erstreckt, und mit seitlichen Querflächen (37), zwischen denen sich das quer verlaufende Element (32) in einer Dickenrichtung erstreckt, versehen ist, wobei die seitlichen Querflächen (37) zum Kontakt mit Scheiben (4, 5) von Riemenscheiben (1, 2) eines Getriebes, in dem der Antriebsriemen (3) verwendet werden kann, bestimmt sind, wobei von den quer verlaufenden Elementen (32) wenigstens zwei Typen (32-I, 32-II) mit einer gegenseitig unterschiedlichen Abmessung in der Dickenrichtung (T32-I; T32-II) in dem Antriebsriemen (3) enthalten sind, **dadurch gekennzeichnet, dass** die Reihe von quer verlaufenden Elementen (32) aus wenigstens drei Gruppen (A, B, C) einer Anzahl von hintereinander angeordneten quer verlaufenden Elementen (32) zusammengesetzt ist, von denen eine erste Gruppe (A) ausschließlich aus relativ dünnen quer verlaufenden Elementen (32-I) besteht, von denen eine zweite Gruppe (B) ausschließlich aus relativ dicken quer verlaufenden Elementen (32-II) besteht, **dadurch gekennzeichnet, dass** eine dritte Gruppe (C) sowohl die relativ dünnen quer verlaufenden Elemente (32-I) als auch die relativ dicken quer verlaufenden Elemente (32-II) in einer gegenseitig abwechselnden Abfolge oder in einer zufälligen Verteilung umfasst.

2. Verfahren zum Zusammenbau eines Antriebsriemens (3) nach Anspruch 1, **dadurch gekennzeichnet, dass** die Reihe von quer verlaufenden Elementen (32) des Antriebsriemensn (3) so zusammengesetzt ist, dass sie wenigstens drei Ausführungen jeder der wenigstens drei Gruppen (A, B, C) einer Reihe von hintereinander angeordneten quer verlaufenden Elementen (32) umfasst.

3. Verfahren zum Zusammenbau eines Antriebsriemens (3) nach Anspruch 1 oder 2, **dadurch gekennzeichnet, dass** die Reihe von quer verlaufenden Elementen (32) des Antriebsriemens (3) so zusammengesetzt ist, dass sie eine Aufeinanderfolge einer ersten Gruppe (A1), die ausschließlich aus den relativ dünnen quer verlaufenden Elementen (32-I) besteht, einer zweiten Gruppe (B1), die ausschließlich aus den relativ dicken quer verlaufenden Elemente (32-II) besteht, einer dritten Gruppe (A2), die ausschließlich aus den relativ dünnen quer verlaufenden Elementen (32-I) besteht, einer vierten Gruppe (B2), die ausschließlich aus den relativ dicken quer verlaufenden Elementen (32-II) besteht, einer fünften Gruppe (C1), die sowohl die relativ dünnen quer verlaufenden Elemente (32-I) als auch die relativ dicken quer verlaufenden Elemente (32-II) enthält, einer sechsten Gruppe (B3), die ausschließlich aus den relativ dicken quer verlaufenden Elementen (32-II) besteht, einer siebten Gruppe (C2), die sowohl die relativ dünnen quer verlaufenden Elemente (32-I) als auch die relativ dicken quer verlaufenden Elemente (32-II) enthält, einer achten Gruppe (A3), die ausschließlich aus den relativ dünnen quer verlaufenden Elementen (32-I) besteht, und einer neunten Gruppe (C3), die sowohl die relativ dünnen quer verlaufenden Elemente (32-I) als auch die relativ dicken quer verlaufenden Elemente (32-II) enthält, umfasst.

4. Antriebsriemen (3) mit einem endlosen Träger (31) und mit einer Reihe von quer verlaufenden Elementen (32), die verschiebbar auf dem Träger (31) angeordnet sind, wobei jedes quer verlaufende Element (32) mit einer Vorderfläche (39) und einer Rückfläche (38), zwischen denen sich das quer verlaufende Element (32) in einer Dickenrichtung erstreckt, und mit seitlichen Querflächen (37), zwischen denen sich das quer verlaufende Element (32) in einer Dickenrichtung erstreckt, versehen ist, wobei die seitlichen Querflächen (37) zum Kontakt mit Scheiben (4, 5) von Riemenscheiben (1, 2) eines Getriebes, in dem der Antriebsriemen (3) verwendet werden kann, bestimmt sind, wobei von den quer verlaufenden Elementen (32) wenigstens zwei Typen (32-I, 32-II) mit einer gegenseitig unterschiedlichen Abmessung in der Dickenrichtung (T32-I; T32-II) in dem Antriebsriemen (3) enthalten sind, **dadurch gekennzeichnet, dass** die Reihe von quer verlaufenden Elementen (32) aus wenigstens drei Gruppen (A, B, C) einer Anzahl von hintereinander angeordneten quer verlaufenden Elementen (32) zusammengesetzt ist, von denen eine erste Gruppe (A) ausschließlich aus relativ dünnen quer verlaufenden Elementen (32-I) besteht, von denen eine zweite Gruppe (B) ausschließlich aus relativ dicken quer verlaufenden Elementen (32-II) besteht, **dadurch gekennzeichnet, dass** eine dritte Gruppe (C) sowohl die relativ dünnen quer verlaufenden Elemente (32-I) als auch die relativ dicken quer verlaufenden Elemente (32-II) in einer gegenseitig abwechselnden Abfolge umfasst.

5. Antriebsriemen (3) nach Anspruch 4, **dadurch gekennzeichnet, dass** die Reihe von quer verlaufenden Elementen (32) desselben wenigstens drei Exemplare jeder der wenigstens drei Gruppen (A, B, C) einer Reihe von hintereinander angeordneten quer verlaufenden Elementen (32) umfasst.

6. Antriebsriemen (3) nach Anspruch 4, **dadurch gekennzeichnet, dass** die Reihe von quer verlaufenden Elemente (32) desselben wenigstens eine Aufeinanderfolge einer ersten Gruppe (A1), die ausschließlich aus den relativ dünnen quer verlaufenden Elementen (32-I) besteht, einer zweiten Gruppe (B1), die ausschließlich aus den relativ dicken quer verlaufenden Elementen (32-II) besteht, einer dritten Gruppe (A2), die ausschließlich aus den relativ dünnen quer verlaufenden Elementen (32-I) besteht, einer vierten Gruppe (B2), die ausschließlich aus den relativ dicken quer verlaufenden Elementen (32-II) besteht, einer fünften Gruppe (C1), die sowohl die relativ dünnen quer verlaufenden Elemente (32-I) als auch die relativ dicken quer verlaufenden Elemente (32-II) enthält, einer sechsten Gruppe (B3), die ausschließlich aus den relativ dicken quer verlaufenden Elementen (32-II) besteht, einer siebten Gruppe (C2), die sowohl die relativ dünnen quer verlaufenden Elemente (32-I) als auch die relativ dicken quer verlaufenden Elemente (32-II) enthält, einer achten Gruppe (A3), die ausschließlich aus den relativ dünnen quer verlaufenden Elementen (32-I) besteht, und einer neunten Gruppe (C3), die sowohl die relativ dünnen quer verlaufenden Elemente (32-I) als auch die relativ dicken quer verlaufenden Elemente (32-II) enthält, umfasst.

7. Antriebsriemen (3) nach Anspruch 4, 5 oder 6, **dadurch gekennzeichnet, dass** die Gruppe (C) oder Gruppen (C1; C2; C3), die sowohl die relativ dünnen quer verlaufenden Elemente (32-I) als auch die relativ dicken quer verlaufenden Elemente (32-II) enthält bzw. enthalten, eine gleiche Menge dieser beiden Typen (32-I, 32-II) von quer verlaufenden Elementen (32) enthält bzw. enthalten.

8. Antriebsriemen (3) nach einem oder mehreren der Ansprüche 4 bis 7, **dadurch gekennzeichnet, dass** die Gruppen (A, B, C; A1, A2, A3, B1, B2, B3, C1, C2, C3) einer Reihe von hintereinander angeordneten quer verlaufenden Elementen (32) gleiche Mengen von quer verlaufenden Elementen (32) enthalten.

9. Antriebsriemen (3) nach einem oder mehreren der Ansprüche 4 bis 7, **dadurch gekennzeichnet, dass** die Gruppen (A, B, C; A1, A2, A3, B1, B2, B3, C1, C2, C3) einer Reihe von hintereinander angeordneten quer verlaufenden Elementen (32), in Umfangsrichtung gesehen, gleiche Längen aufweisen.

10. Antriebsriemen (3) nach einem oder mehreren der Ansprüche 4 bis 9, **dadurch gekennzeichnet, dass** die Gruppen (A, B, C; A1, A2, A3, B1, B2, B3, C1, C2, C3) einer Reihe von hintereinander angeordneten quer verlaufenden Elementen (32) zusammen wenigstens 80% und vorzugsweise 95% bis 98% einer Gesamtanzahl von quer verlaufenden Elementen (32), die in dem Antriebsriemen (3) enthalten sind, enthalten.

11. Antriebsriemen (3) nach Anspruch 10, **dadurch gekennzeichnet, dass** die quer verlaufenden Elemente (32) desselben, die nicht in den Gruppen (A, B, C; A1, A2, A3, B1, B2, B3, C1, C2, C3) einer Reihe von hintereinander angeordneten quer verlaufenden Elementen (32) enthalten sind, hintereinander in einer finalen Gruppe (S) angeordnet sind.

## Revendications

1. Procédé d'assemblage d'une courroie d'entraînement (3) avec un support sans fin (31) et avec une rangée d'éléments transversaux (32) qui sont disposés coulissants sur le support (31), chaque élément transversal (32) comprenant une surface avant (39) et une surface arrière (38), entre lesquelles l'élément transversal (32) s'étend dans la direction de l'épaisseur, et des surfaces latérales (37), entre lesquelles l'élément transversal (32) s'étend dans la direction de la largeur, lesdites surfaces latérales (37) étant destinées à être en contact avec des disques de poulie (4, 5) de poulies (1, 2) d'une transmission où la courroie d'entraînement (3) peut être appliquée, dont des éléments transversaux (32) d'au moins deux types (32-I, 32-II) avec une dimension mutuellement différente dans ladite direction de l'épaisseur (T32-I ; T32-II) sont contenus dans la courroie d'entraînement (3), **caractérisé en ce que** ladite rangée d'éléments transversaux (32) est composée pour inclure au moins trois groupes (A, B, C) d'un certain nombre d'éléments transversaux (32) disposés consécutivement, dont un premier groupe (A) consiste exclusivement en des éléments transversaux relativement minces (32-I), dont un deuxième (B) consiste exclusivement en des éléments transversaux relativement épais (32-II), **caractérisé en ce qu'**un troisième groupe (C) comprend à la fois les éléments transversaux relativement minces (32-I) et les éléments transversaux relativement épais (32-II) disposés selon une séquence mutuellement alternée ou selon une distribution aléatoire.

2. Procédé d'assemblage de courroie d'entraînement (3) selon la revendication 1, **caractérisé en ce que** ladite rangée d'éléments transversaux (32) de la courroie d'entraînement (3) est composée pour inclure au moins trois instances de chacun desdits au moins trois groupes (A, B, C) d'un certain nombre d'éléments transversaux (32) disposés consécutivement.

3. Procédé d'assemblage de courroie d'entraînement (3) selon la revendication 1 ou 2, **caractérisé en ce que** ladite rangée d'éléments transversaux (32) de la courroie d'entraînement (3) est composée pour inclure une succession d'un premier groupe (A1) constitué exclusivement des éléments transversaux relativement minces (32-I), d'un deuxième groupe (Bl) constitué exclusivement des éléments transversaux relativement épais (32-II), d'un troisième groupe (A2) constitué exclusivement des éléments transversaux relativement minces (32-I), d'un quatrième groupe (B2) constitué exclusivement des éléments transversaux relativement épais (32-II), d'un cinquième groupe (C1) qui comprend à la fois les éléments transversaux relativement minces (32-I) et les éléments transversaux relativement épais (32-II), d'un sixième groupe (B3) qui comprend exclusivement les éléments transversaux relativement épais (32-II), d'un septième groupe (C2) qui comprend à la fois les éléments transversaux relativement minces (32-I) et les éléments transversaux relativement épais (32-II), d'un huitième groupe (A3) constitué exclusivement des éléments transversaux relativement minces (32-I) et d'un neuvième groupe (C3) qui comprend à la fois les éléments transversaux relativement minces (32-I) et les éléments transversaux relativement épais (32-II).

4. Courroie d'entraînement (3) avec un support sans fin (31) et avec une rangée d'éléments transversaux (32) qui sont disposés coulissants sur le support (31), chaque élément transversal (32) comprenant une surface avant (39) et une surface arrière (38), entre lesquelles l'élément transversal (32) s'étend dans la direction de l'épaisseur, et des surfaces latérales (37), entre lesquelles l'élément transversal (32) s'étend dans la direction de la largeur, lesdites surfaces latérales (37) étant destinées à être en contact avec des disques de poulie (4, 5) de poulies (1, 2) d'une transmission où la courroie d'entraînement (3) peut être appliquée, dont des éléments transversaux (32) d'au moins deux types (32-I, 32-II) avec une dimension mutuellement différente dans ladite direction de l'épaisseur (T32-I ; T32-II) sont contenus dans la courroie d'entraînement (3), **caractérisé en ce que** ladite rangée d'éléments transversaux (32) est composée d'au moins trois groupes (A, B, C) d'un certain nombre d'éléments transversaux (32) disposés consécutivement, dont un premier groupe (A) consiste exclusivement en des éléments transversaux relativement minces (32-I), dont un deuxième (B) consiste exclusivement en des éléments transversaux relativement épais (32-II), **caractérisé en ce qu'**un troisième groupe (C) comprend les éléments transversaux relativement minces (32-I) et les éléments transversaux relativement épais (32-II) disposés selon une séquence mutuellement alternée.

5. Courroie d'entraînement (3) selon la revendication 4, **caractérisé en ce que** ladite rangée d'éléments transversaux (32) associée comprend au moins trois instances de chacun desdits au moins trois groupes (A, B, C) d'un certain nombre d'éléments transversaux (32) disposés consécutivement.

6. Courroie d'entraînement (3) selon la revendication 4, **caractérisée en ce que** ladite rangée d'éléments transversaux (32) associée comprend au moins une succession d'un premier groupe (A1) constitué exclusivement des éléments transversaux relativement minces (32-I), d'un deuxième groupe (B1) constitué exclusivement des éléments transversaux relativement épais (32-II), d'un troisième groupe (A2) constitué exclusivement des éléments transversaux relativement minces (32-I), d'un quatrième groupe (B2) constitué exclusivement des éléments transversaux relativement épais (32-II), d'un cinquième groupe (C1) qui comprend à la fois les éléments transversaux relativement minces (32-I) et les éléments transversaux relativement épais (32-II), d'un sixième groupe (B3) qui comprend exclusivement les éléments transversaux relativement épais (32-II), d'un septième groupe (C2) qui comprend les éléments transversaux relativement minces (32-I) et les éléments transversaux relativement épais (32-II), d'un huitième groupe (A3) constitué exclusivement des éléments transversaux relativement minces (32-I) et d'un neuvième groupe (C3) qui comprend à la fois les éléments transversaux relativement minces (32-I) et les éléments transversaux relativement épais (32-II).

7. Courroie d'entraînement (3) selon la revendication 4, 5 ou 6, **caractérisée en ce que** ledit groupe (C) ou lesdits groupes (C1 ; C2 ; C3) qui comprennent à la fois les éléments transversaux relativement minces (32-I) et les éléments transversaux relativement épais (32-II) comprennent une quantité similaire de ces deux types (32-I, 32-II) d'éléments transversaux (32).

8. Courroie d'entraînement (3) selon une ou plusieurs des revendications 4 à 7, **caractérisée en ce que** les groupes (A, B, C ; A1, A2, A3, B1, B2, B3, C1, C2, C3) d'un certain nombre d'éléments transversaux (32) disposés consécutivement comprennent des quantités similaires d'éléments transversaux (32).

9. Courroie d'entraînement (3) selon une ou plusieurs des revendications 4 à 7, **caractérisée en ce que** les groupes (A, B, C ; A1, A2, A3, B1, B2, B3, C1, C2, C3) d'un certain nombre d'éléments transversaux (32) disposés consécutivement ont des longueurs similaires comme vu dans la direction circonférentielle.

10. Courroie d'entraînement (3) selon une ou plusieurs des revendications 4 à 9, **caractérisée en ce que**, ensemble, les groupes (A, B, C ; A1, A2, A3, B1, B2, B3, C1, C2, C3) d'un certain nombre d'éléments transversaux (32) disposés consécutivement comprennent au moins 80 % et de préférence de 95 % à 98 % du nombre total d'éléments transversaux (32) contenus dans la courroie d'entraînement (3).

11. Courroie d'entraînement (3) selon la revendication 10, **caractérisée en ce que** les éléments transversaux (32) associés qui ne sont pas compris dans lesdits groupes (A, B, C ; A1, A2, A3, B1, B2, B3, C1, C2, C3) d'un certain nombre d'éléments transversaux (32) disposés consécutivement, sont disposés consécutivement dans un groupe final (S).
